# EUROPEAN PATENT SPECIFICATION

(11) **EP 2 373 534 B1**
(45) Date of publication and mention of the grant of the patent: **30.04.2014**
(21) Application number: 09831352.1
(22) Date of filing: 11.12.2009
(51) Int. Cl.: B62D 55/24, B62D 55/08, B62D 55/26

(54) **TRACTION BAND**
ZUGBAND
BANDE DE TRACTION

(30) Priority: 11.12.2008 CA 2647369; 11.12.2008 US 332991
(43) Date of publication of application: 12.10.2011
(73) Proprietor: Soucy International Inc., Drummondville, QC J2E 1A9 (CA)
(72) Inventor: LEMAIRE, Marc-André, Drummondville Quebec J2C 1J3 (CA); FAUCHER, Claude, Drummondville Quebec J2B 7S4 (CA); ST-PIERRE, Yves, Wickham Quebec J0C 1S0 (CA)
(74) Representative: Vuillermoz, Bruno
(86) International application number: PCT/CA2009/001795
(87) International publication number: WO 2010/066043

(56) References cited:
- EP-A1- 2 036 803
- EP-A1- 2 123 544
- DE-A1- 4 409 841
- US-A- 5 005 921
- US-A- 5 632 537
- US-A1- 2003 111 903
- US-A1- 2005 035 655
- US-A1- 2006 284 484

## Description

### Field of the Invention

The present invention generally relates to traction bands and endless tracks for use on tracked vehicles. More particularly, but not exclusively, the present invention relates to traction bands and endless tracks for use on agricultural, construction and forestry vehicles and other similar tracked vehicles.

### Background of the Invention

Numerous types of vehicles are frequently used on terrain on which it is difficult for pneumatic tires to operate. Both military vehicles, such as tanks and armored personal vehicles, and civilian vehicles, such as tractors and recreational vehicles, are operated on terrains, such as sand surfaces, which are very soft. Pneumatic tires are generally incapable of efficient operation on such soft surfaces as they tend to burrow into the surface rather than riding across the surface.

Tracked vehicles have been developed for use on terrains on which wheeled vehicles are impractical. See for example U.S. Patent Nos. 3,361,488; 3,688,858; 3,734,577; and 3,955,855; and DE 4409941. On many types of terrains, these vehicles provide improved performance relative to the performance of wheeled vehicles. Still, difficulties are encountered with existing tracked vehicles.

Originally, tracked vehicles were provided with tracks made of a plurality of metallic links or shoes pivotally attached to each other to form an endless track.

Nowadays, elastomeric tracks have become more popular due to an increase in construction in turban areas where tracked vehicles must drive on pavement and due to a rising demand for low soil compaction agricultural vehicles.

With the development of elastomeric traction bands and endless tracks, numerous exterior thread patterns adapted to be used on various types of terrain have been designed. For instance, some thread patterns of certain tracks have a large ground contacting surface which is more adapted to be used on hard surfaces such as asphalt and concrete, but which provides less traction on soft surfaces such as soil and sand. Thread patterns adapted to be used on soft surfaces have also been developed, but they generally do not have a very good durability on hard surfaces.

On agricultural vehicles and other tracked farming vehicles such as tractors, one type of thread pattern is commonly used and generally corresponds to the chevron pattern. This particular thread pattern generally gives an adequate traction on most terrains, which is very important for agricultural vehicles. However, due to the configuration of the chevrons, conventional chevron thread patterns typically suffer from requiring more energy to bend the track thereby increasing rolling resistance and ultimately, fuel consumption.

There have been attempts to reduce the energy required to bend endless tracks having generally chevron thread pattern. In U.S. Patent No. 6,241,327, the traction lugs forming the chevron pattern are provided with cuts which open during bending of the track. However, these cuts significantly reduce the structural integrity of the traction lugs and thus of the track and ultimately produce only limited results. In U.S. Patent Nos. 5,632,537 and 6,510,913, the chevron thread pattern is formed by several independent traction lugs. By dividing the chevron pattern into several traction lugs, the contact surface of the traction lugs is generally reduced, thereby increasing the level of vibration. In European Patent Application Publication No. 2 123 544, the chevron thread pattern is formed by several traction lugs. However, in this case, several of the traction lugs extend over the hinge regions of the endless track, thereby increasing the energy required to bend endless track.

Hence, there is a need for an improved traction band which mitigates the shortcomings of prior art traction bands.

### Summary of the Invention

The present invention mitigates the shortcomings of the prior art by generally providing an improved elastomeric traction band. The traction band typically comprises a main band body divided into a plurality of band sections attached together (usually unitarily) along laterally extending pitch lines, the longitudinal extent of each band section being generally referred as pitch. The band body has an interior wheel-engaging surface, adapted to cooperate with the various wheels (e.g. sprocket wheel, idler wheel(s) and/or road wheel(s)) of the track system onto which the traction band is mounted, and an external ground-engaging surface adapted to engage the ground.

The wheel-engaging surface comprises one or more rows of longitudinally spaced-apart drive lugs (and/or guide lugs) disposed along the length of the band, typically on each band section. Consecutive drive lugs (and/or guide lugs) being separated by laterally extending regions devoid of drive lugs (and guide lugs) which are substantially aligned with the pitch lines.

The ground-engaging surface comprises traction lugs, some of which are extending longitudinally across more than one band section. These longitudinally extending traction lugs advantageously comprise laterally extending bending regions where the traction lugs are thinner. These bending regions are generally aligned with the pitch lines and thus, with the regions on the inner surface which are devoid of drive lugs (and guide lugs).

Preferably, the thickness of the bending regions is a fraction of the thickness of the traction lugs.

Preferably, but not exclusively, the traction lugs substantially define a chevron thread pattern.

The skilled addressee will readily understand that the alignment of the thinner bending regions with the regions which are devoid of drive lugs (and guide lugs) on the inner surface reduces the energy required to bend or flex the traction band around the various wheels of the track system. Consequently, the traction band of the present invention reduces rolling resistance and thereby fuel consumption.

In addition, the thinner bending regions, as opposed to the prior art complete partition of the traction lugs, maintain substantial continuity and structural integrity of the tractions lugs, thereby preserving the particular advantages of the traction lugs (e.g. soil and debris evacuation, traction, etc.).

The features of the present invention which are believed to be novel are set forth with particularity in the appended claims.

### Brief Description of the Drawings

The above and other objects, features and advantages of the invention will become more readily apparent from the following description, reference being made to the accompanying drawings in which:
Figure 1 is a top perspective view of a portion of a traction band incorporating the principles of the invention.
Figure 2 is a front view of the traction band shown in Fig. 1.
Figure 3 is a top view of the traction band shown in Fig. 1.
Figure 4 is a bottom view of the traction band shown in Fig. 1.
Figure 5 is a side view of the traction band shown in Fig. 1.
Figure 6 is a side perspective view of a track system comprising a traction band incorporating the principles of the invention.

### Detailed Description of the Preferred Embodiment

A novel traction band will be described hereinafter. Although the invention is described in terms of specific illustrative embodiments, it is to be understood that the embodiments described herein are by way of example only and that the scope of the invention is not intended to be limited thereby.

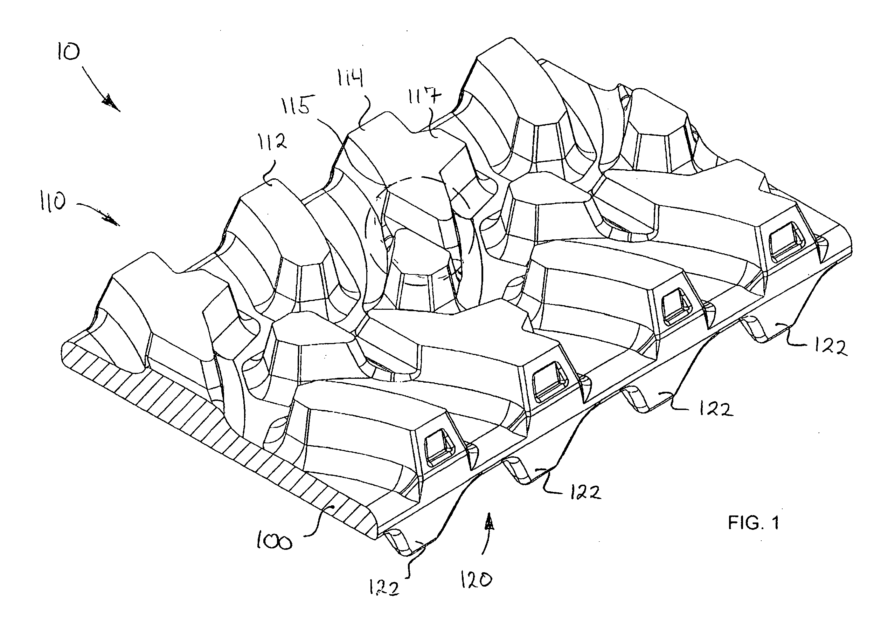

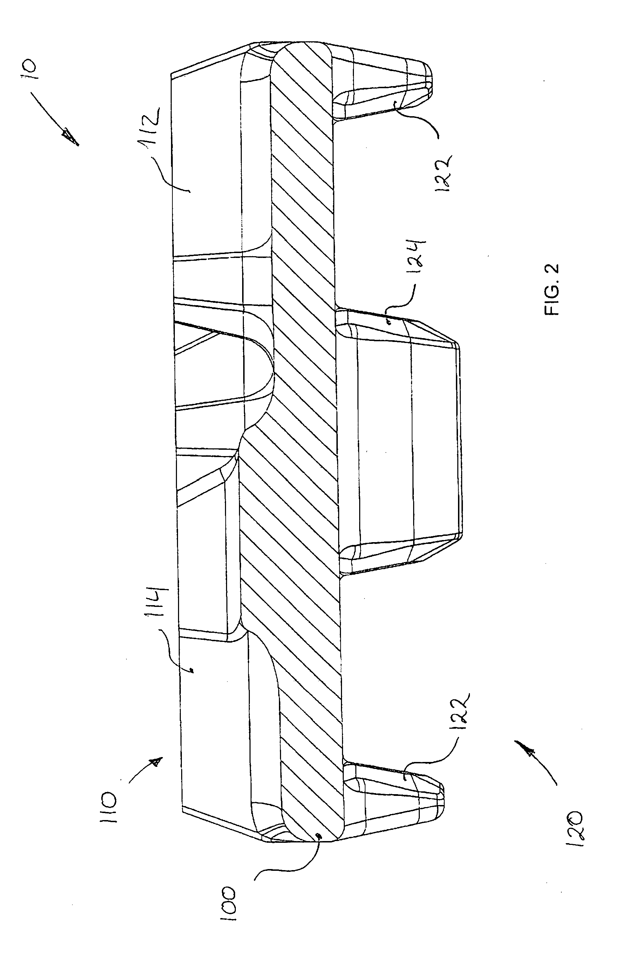

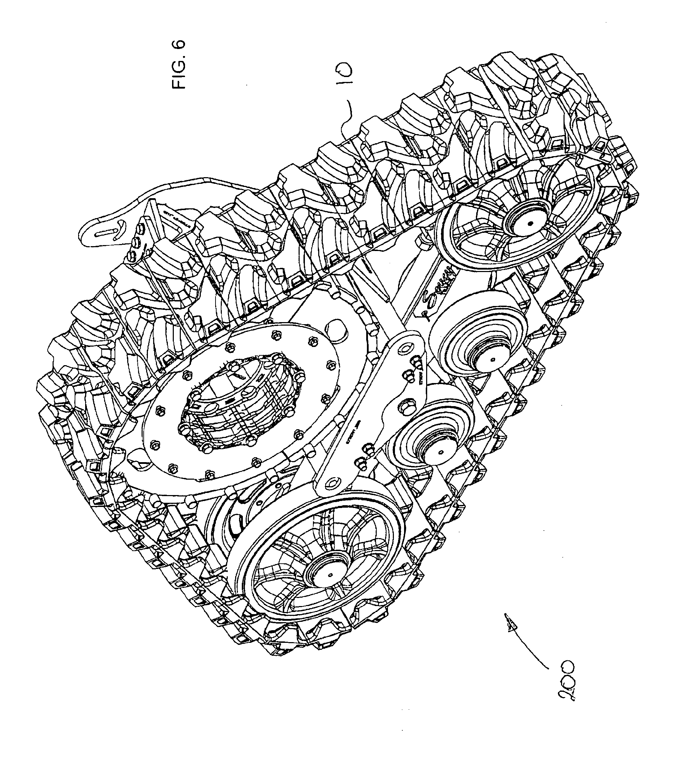

Referring first to Figs. 1 and 2, an exemplary traction band 10 incorporating the principles of the invention is illustrated. The traction band 10 is generally adapted to be used with a track system such as the track system 200 shown in Fig. 6. Track systems such as track system 200 are generally known in the art and need not be further described.

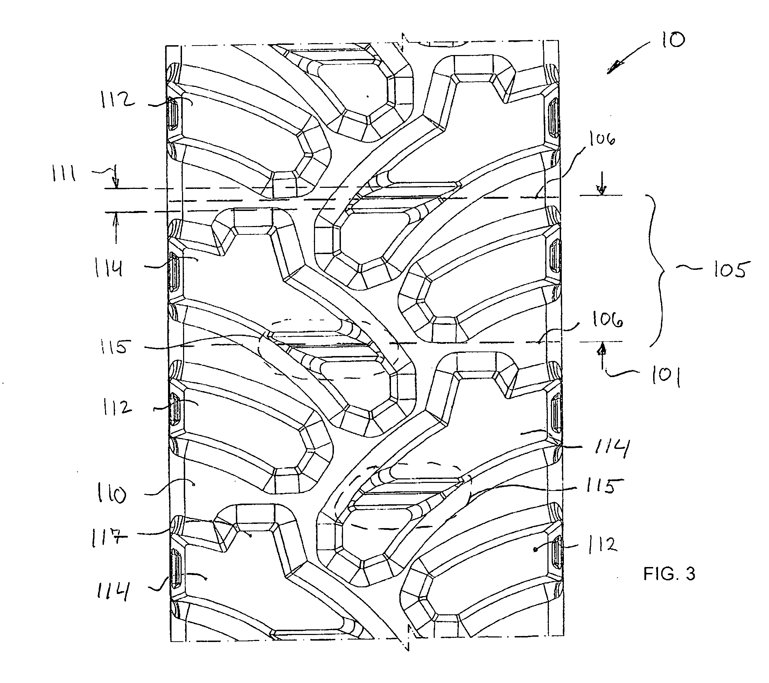

The traction band 10 typically comprises a main band body 100 divided into a plurality of band sections 105 (Figs. 3-5) attached together, usually unitarily, along laterally extending pitch lines 106. The band body 100, preferably made from reinforced elastomeric material, has an external or outer ground-engaging surface 110 and an internal or inner wheel-engaging surface 120.

The outer surface 110 is typically provided with a series of outer or ground-engaging traction lugs 112 and 114 disposed longitudinally along the outer circumference of the traction band 10. Typically, the traction lugs 112 and 114 are disposed such as to define a thread pattern. In the present preferred embodiment, the thread pattern generally follows a chevron pattern. Still, other thread patterns are possible; the present invention is thus not so limited.

For its part, the inner surface 120 is typically, but not necessarily, provided with one or more rows of inner lugs such as drive lugs 124, adapted to cooperate with a sprocket wheel, and guide lugs 122, adapted to guide the traction band 10 around the sprocket wheel, the idler wheels and the road wheels. The guide lugs 122 and the drive lugs 124 are normally longitudinally disposed along the inner circumference of the traction band 10.

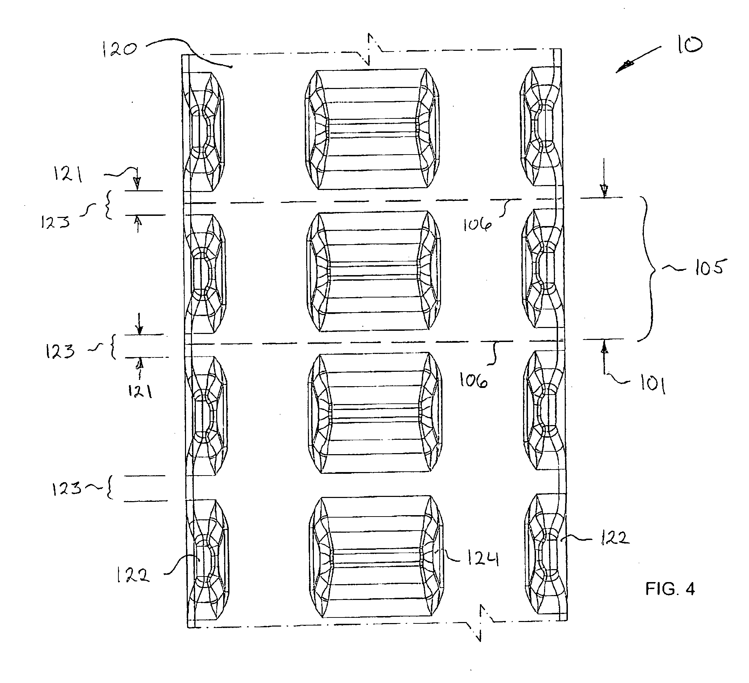

Referring now to Figs. 3 to 5 and more particularly to Fig. 4, the drive lugs 124 and guide lugs 122 are generally regularly disposed on each band section 105 along the inner circumference of the track 10. Typically, when more than one row of drive lugs 124 or guide lugs 122 are present, the drive lugs 124 and/or the guide lugs 122 are laterally aligned on each band section 105 as best depicted in Fig. 4.

In order to allow bending of the traction band 10 around the various wheels of the track system onto which the traction band 10 is installed, the guide lugs 122 and the drive lugs 124 are generally longitudinally spaced apart whereby consecutive guide lugs 122 or drive lugs 124 are separated by laterally extending regions 123 devoid of guide and drive lugs. Preferably, these hinge regions 123 are substantially aligned with the pitch lines 106 as depicted in Fig. 4.

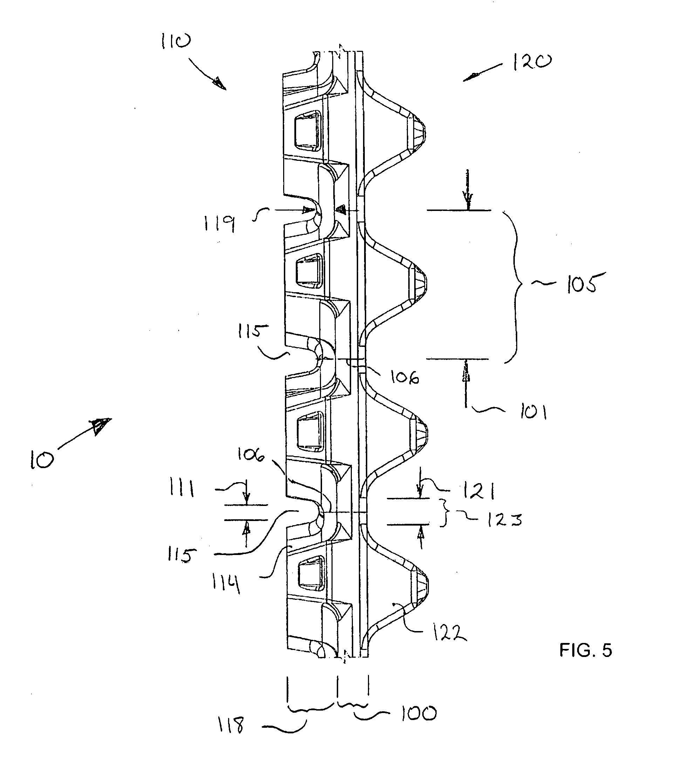

Referring now to Figs. 3 and 5, the outer surface 110 of the traction band 10 is illustrated in more details. As mentioned above, the outer surface 110 is provided with tractions lugs 112 and 114 which, in the present embodiment, define a chevron thread pattern. As the skilled addressee will note, traction lugs 114 extend in the longitudinal direction across more than one band section 105. By extending across more than one band section 105, the traction lugs 114 effectively extend over the pitch lines 106 and thus over the lug-less hinge regions 123 of the inner surface 120.

In accordance with the principles of the present invention, in order to generally ease the bending of the traction band 10 along these hinge regions 123 and in order to generally reduce the tension in the traction lugs 114, the traction lugs 114 are provided with laterally extending bending regions 115. These bending regions 115 are regions of the traction lugs 114 where the thickness 118 of the lugs 114 is reduced.

Typically, the thickness 119 along the bending regions 115 is a fraction of the thickness 118 of the traction lugs 114. Generally, the ratio between the thickness 119 of the bending region 115 and the thickness 118 of the traction lugs 114 is between 0 and 0.75. Preferably, the ratio is between 0 and 0.5, and most preferably between 0 and 0.35.

In addition, as best shown in Fig. 5, the bending regions 115 are substantially aligned with the pitch lines 106 and thus with the hinge regions 123. Also, the width 111 of the bending regions 115 is preferably similar to the width 121 of the hinge regions 123.

By providing the traction lugs 114 with these thinner bending regions 115, the overall thickness of the traction band 10 along the hinge regions 123 is reduced, thereby reducing the energy required to actually bend the traction band 10 around the various wheels of the track system. This reduces the rolling resistance and thereby the fuel consumption of the tracked vehicle.

In addition, the skilled addressee will note that by not reducing the thickness 119 of the bending regions 115 to zero (i.e. no lug), as in the prior art (see particularly U.S. Patent No. 6,241,327), the thinner bending regions 115 maintain substantial continuity and structural integrity of the tractions lugs 114 and ultimately of the track 10. Consequently, the traction lugs 114 substantially maintain their ground-engaging characteristics (e.g. contact surface, traction, soil and debris evacuation, etc.). Moreover, aesthetically, the thread pattern is substantially preserved.

Referring back to Figs. 1 and 3, traction lugs 114 are also preferably provided with extensions 117. Extensions 117 typically provide additional contact surface between the traction band 10 and the ground, particularly on hard surfaces such as asphalt and concrete. As the skilled addressee would understand, the extensions 117 can take several shapes and more than one extension 117 could be provided on traction lugs 114. In addition, traction lugs 112 could also benefit from having such extensions 117.

The skilled addressee will understand that a traction band 10 incorporating the principles of the present invention can advantageously be used on different types of track systems (e.g. track system 200) and/or on different types of tracked vehicles known in the art (e.g. agricultural vehicles, forestry vehicles, construction vehicles, military vehicles, etc.).

## Claims

1. A traction band (10) comprising a band body (100) divided into a plurality of band sections (105) along laterally extending pitch lines (106), said body (100) having an inner surface (120) and an outer surface (110), said inner surface (120) comprising inner lugs (122, 124) disposed longitudinally on said band sections (105), consecutive inner lugs (122, 124) being separated by laterally extending regions (123) substantially aligned with said pitch lines (106) and devoid of said inner lugs (122, 124), said outer surface (110) comprising outer lugs (112, 114);
**characterized in that** some of said outer lugs (114) extend longitudinally across more than one of said band sections (105), said some of said outer lugs (114) comprising thinner regions (115) substantially aligned with said laterally extending regions (123) devoid of said inner lugs (122, 124).

2. A traction band (10) as claimed in claim 1, wherein said regions (123) devoid of said inner lugs (122, 124) have a first width (121) and said thinner regions (115) have a second width (111), said first width (121) and said second width (111) being substantially equal.

3. A traction band (10) as claimed in claims 1 or 2, wherein said some traction lugs (114) have a first thickness (118) and said thinner regions (115) have a second thickness (119), the ratio of said second thickness (119) to said first thickness (118) being greater than zero and lower or equal to 0.75.

4. A traction band (10) as claimed in claims 1 or 2, wherein said some traction lugs (114) have a first thickness (118) and said thinner regions (115) have a second thickness (119), the ratio of said second thickness (119) to said first thickness (118) being greater than zero and lower or equal to 0.50.

5. A traction band (10) as claimed in claims 1 or 2, wherein said some traction lugs (114) have a first thickness (118) and said thinner regions (115) have a second thickness (119), the ratio of said second thickness (119) to said first thickness (118) being greater than zero and lower or equal to 0.35.

6. A traction band (10) as claimed in any of claims 1 to 5, wherein said traction band (10) is substantially made from elastomeric material.

7. A traction band (10) as claimed in any of claims 1 to 6, wherein said band body (100) is unitary.

8. A traction band (10) as claimed in any of claims 1 to 7, wherein said outer lugs (112, 114) define a chevron-like pattern.

9. A track system comprising a frame, a sprocket wheel and a traction (10) band as claimed in any of claims 1 to 8.

10. A tracked vehicle having mounted thereto a traction band (10) as claimed in any of claims 1 to 8.

## Patentansprüche

1. Zugband (10) mit einem Bandkörper (100), der entlang sich quer erstreckender Teilungslinien (106) in mehrere Bandabschnitte (105) unterteilt ist, wobei der Körper (100) eine Innenfläche (120) und eine Außenfläche (110) hat, wobei die Innenfläche (120) Innenansätze (122, 124) aufweist, die längs an den Bandabschnitten (105) angeordnet sind, wobei aufeinander folgende Innenansätze (122, 124) durch sich quer erstreckende Bereiche (123) getrennt sind, die im Wesentlichen entlang der Teilungslinien (106) ausgerichtet und frei von den Innenansätzen (122, 124) sind, wobei die Außenfläche (110) Außenansätze (112, 114) aufweist;
**dadurch gekennzeichnet, dass** sich einige der Außenansätze (114) längs über mehr als einen der Bandabschnitte (105) erstrecken, wobei diese einigen Außenansätze (114) dünnere Bereiche (115) aufweisen, die im Wesentlichen entlang der sich quer erstreckenden Bereiche (123) ausgerichtet sind, die frei von den Innenansätzen (122, 124) sind.

2. Zugband (10) nach Anspruch 1, wobei die Bereiche (123), die frei von den Innenansätzen (122, 124) sind, eine erste Breite (121) haben, und die dünneren Bereiche (115) eine zweite Breite (111) haben, wobei die erste Breite (121) und die zweite Breite (111) im Wesentlichen gleich sind.

3. Zugband (10) nach Anspruch 1 oder 2, wobei die einigen Zugansätze (114) eine erste Dicke (118) haben, und die dünneren Bereiche (115) eine zweite Dicke (119) haben, wobei das Verhältnis der zweiten Dicke (119) zur ersten Dicke (118) größer als Null und kleiner oder gleich 0,75 ist.

4. Zugband (10) nach Anspruch 1 oder 2, wobei die einigen Zugansätze (114) eine erste Dicke (118) haben, und die dünneren Bereiche (115) eine zweite Dicke (119) haben, wobei das Verhältnis der zweiten Dicke (119) zur ersten Dicke (118) größer als Null und kleiner oder gleich 0,50 ist.

5. Zugband (10) nach Anspruch 1 oder 2, wobei die einigen Zugansätze (114) eine erste Dicke (118) haben, und die dünneren Bereiche (115) eine zweite Dicke (119) haben, wobei das Verhältnis der zweiten Dicke (119) zur ersten Dicke (118) größer als Null und kleiner oder gleich 0,35 ist.

6. Zugband (10) nach einem der Ansprüche 1 bis 5, wobei das Zugband (10) im Wesentlichen aus einem Elastomermaterial hergestellt ist.

7. Zugband (10) nach einem der Ansprüche 1 bis 6, wobei der Bandkörper (100) einheitlich ist.

8. Zugband (10) nach einem der Ansprüche 1 bis 7, wobei die Außenansätze (112, 114) ein fischgrätenartiges Muster bilden.

9. Kettensystem mit einem Rahmen, einem Kettenrad und einem Zugband (10) nach einem der Ansprüche 1 bis 8.

10. Kettenfahrzeug mit einem daran angebrachten Zugband (10) nach einem der Ansprüche 1 bis 8.

## Revendications

1. Une bande de traction (10) comprenant un corps en bande (100) divisée en une pluralité de sections en bande (105) le long de lignes primitives (106) s'étendant latéralement, ledit corps (100) ayant une surface intérieure (120) et une surface extérieure (110), ladite surface intérieure (120) comprenant des pattes intérieures (122, 124) disposées longitudinalement sur lesdites sections (105), les pattes intérieures (122, 124) consécutives étant séparées par des régions (123) s'étendant latéralement sensiblement alignées avec lesdites lignes primitives et dépourvues desdites pattes intérieures (122, 124), ladite surface extérieure (110) comprenant des pattes extérieures (112, 114) ; **caractérisé en ce que** certaines desdites pattes extérieures (114) s'étendent longitudinalement à travers plus d'une desdites sections (105), lesdites certaines pattes extérieures (114) comprenant des régions amincies (115) alignées substantiellement avec lesdites régions (123) s'étendant latéralement et dépourvues desdites pattes intérieures (122, 124).

2. La bande de traction (10) selon la revendication 1, dans lequel lesdites régions (123) dépourvues desdites pattes intérieures (122, 124) ont une première largeur (121) et lesdites régions amincies (115) ont une seconde largeur (111), ladite première largeur (121) et ladite seconde largeur (111) étant sensiblement égaux.

3. La bande de traction (10) selon la revendication 1 ou 2, dans lequel lesdites certaines pattes extérieures (114) de traction ont une première épaisseur (118) et lesdites régions amincies (115) ont une seconde épaisseur (119), le ratio de ladite seconde épaisseur (119) sur ladite première épaisseur (118) étant supérieur à zéro et inférieur à 0,75.

4. La bande de traction (10) selon la revendication 1 ou 2, dans lequel lesdites certaines pattes extérieures (114) de traction ont une première épaisseur (118) et lesdites régions amincies (115) ont une seconde épaisseur (119), le ratio de ladite seconde épaisseur (119) sur ladite première épaisseur (118) étant supérieur à zéro et inférieur à 0,50.

5. La bande de traction (10) selon la revendication 1 ou 2, dans lequel lesdites certaines pattes extérieures (114) de traction ont une première épaisseur (118) et lesdites régions amincies (115) ont une seconde épaisseur (119), le ratio de ladite seconde épaisseur (119) sur ladite première épaisseur (118) étant supérieur à zéro et inférieur à 0,35.

6. La bande de traction (10) selon l'une des revendications 1 à 5, dans lequel ladite bande de traction (10) est réalisée à partir de matériau élastomère.

7. La bande de traction (10) selon l'une des revendications 1 à 6, dans lequel ledit corps (100) est unitaire.

8. La bande de traction (10) selon l'une des revendications 1 à 6, dans lequel lesdites pattes extérieures (112, 114) définissent un motif en chevron.

9. Système de chenille comprenant un châssis, une roue dentée et une bande de traction (10) selon l'une des revendications 1 à 8.

10. Véhicule à chenilles sur lequel est monté une bande de traction (10) selon l'une des revendications 1 à 8.
